# FASCICULE DE BREVET EUROPEEN

(11) **EP 2 242 158 B1**
(45) Date de publication et mention de la délivrance du brevet: **12.06.2013**
(21) Numéro de dépôt: 10007671.0
(22) Date de dépôt: 23.01.2007
(51) Int. Cl.: H02G 3/18

(54) **Griffes de fixation pour des appareillages électriques**
Befestigungshaken für elektrische Geräte
Fastening claws for electrical appliances

(43) Date de publication de la demande: 20.10.2010
(62) Demande divisionnaire de: 07360003.3
(73) Titulaire: HAGER ELECTRO S.A.S., 67210 Obernai (FR)
(72) Inventeur: Lorenzetto, Giorgio, 25045 Castegnato (Bs) (IT)
(74) Mandataire: Nuss, Laurent

(56) Documents cités:
- FR-A1- 2 763 179
- FR-A1- 2 770 937
- FR-A1- 2 844 106

## Description

La présente invention concerne le domaine des appareillages électriques, domestiques, semi-encastrés, tels que les prises de courant, les interrupteurs, les détecteurs infrarouges, etc... qui sont fixés dans des boîtes d'encastrement par l'intermédiaire de griffes et a pour objet de telles griffes isolées montées sur butées métalliques.

Actuellement, les griffes de fixation de tels appareillages, qui sont destinées à s'accrocher dans les parois correspondantes des boîtes d'encastrement sous l'effet d'un serrage par vis ayant tendance à faire pivoter ces griffes en direction desdites parois, sont généralement montées sur des supports correspondants des appareillages et rappelées en position de repos par l'intermédiaire de moyens élastiques tels qu'une bande élastique entourant totalement l'appareillage et s'appuyant sur les faces externes des griffes, soit encore au moyen de dispositifs à ressort tels que des lames de ressorts de flexion rivetées sur les griffes ou encore par des ressorts de torsion agissant sur lesdites griffes. Enfin, il existe également un montage de griffes, dans lequel celles-ci sont en appui contre des languettes-ressorts des boîtiers.

Les supports des griffes font partie intégrante du corps de l'appareillage et sont donc réalisés dans la même matière que celui-ci, à savoir en une matière synthétique isolante. Les vis de serrage sont vissées dans des taraudages prévus dans lesdits supports ou dans des inserts métalliques rapportés dans ces derniers.

Ces griffes connues permettent de réaliser un serrage relativement correct dans un boîtier. Toutefois, il n'existe pas actuellement de solution fiable concernant une isolation électrique entre griffes et plaque de support de l'appareillage. De plus, un escamotage correct des griffes en position de repos, évitant tout risque de détérioration des câbles débouchant dans le boîtier.

En outre, les moyens de rappel des griffes présentent un certain nombre d'inconvénients. Ainsi, les moyens élastiques de rappel vieillissent très rapidement, ce qui entraîne leur destruction. Les dispositifs de rappel à ressort, tels que des lames rivetées sur les griffes, notamment connus par DE-A-38 23 117, présentent l'inconvénient de fournir une solution relativement complexe et onéreuse au problème du rappel des griffes, et le montage de ressorts de torsion ou de flexion, tel qu'il est proposé par FR-A-2 770 937, est généralement difficile à réaliser et il existe un risque de dégradation du ressort par dépassement de sa limite élastique.

Par ailleurs, en cas de nécessité d'un serrage particulièrement fort ou lorsque la mise en place de l'appareillage dans le boîtier s'effectue avec difficulté, l'installateur à tendance à exercer une forte pression sur la vis, de sorte que le support en matière synthétique, dans lequel est serrée la vis, a tendance à se déformer, parfois à un point tel que la vis ne peut plus être manoeuvrée, voire que le support est totalement détérioré.

Le document FR-A-2 763 179 décrit un support pour appareillage semi-encastré, électrique, domestique, tel qu'une prise de courant, un interrupteur, un détecteur infrarouge... muni de griffes de fixation dans une boîte d'encastrement où chaque griffe est montée sur son support correspondant du corps de l'appareillage par l'intermédiaire d'un bloc de butée taraudé. Les griffes présentent une forme générale en U ou en étrier, dont les deux ailes verticales parallèles se terminent par des dents et dont l'âme est pourvue d'un perçage de passage d'une vis de serrage, cette dernière venant en prise dans un logement tubulaire du support. Lors du serrage de cette vis, les ailes s'écartent jusqu'à entrer en contact avec la paroi intérieure d'un boîtier d'encastrement ou analogue.

La présente invention a pour but de pallier les inconvénients des fixations et supports de griffes connus à ce jour en proposant des griffes totalement protégées contre un risque de détérioration de câble lors de la mise en place de l'appareillage, ainsi que contre un risque de blessure des opérateurs.

A cet effet, elle a pour objet un appareillage qui reprend les caractéristiques de la revendication 1. Les griffes pouvant ainsi être totalement escamotées dans leur support correspondant, elles sont totalement protégées contre un risque de détérioration de câble lors de la mise en place de l'appareillage, ainsi que contre un risque de blessure des opérateurs.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale et en coupe représentant le montage des griffes conformes à l'invention, suivant deux demi-vues, la demi-vue de droite représentant la griffe en position escamotée et la demi-vue de gauche représentant la griffe en position déployée de service ;
la figure 2 est une vue éclatée en perspective d'un appareillage muni des griffes conformes à l'invention ;
la figure 3 est une vue partielle, en coupe, à plus grande échelle, représentant la griffe escamotée selon la demi-vue de droite de la figure 1, et
la figure 4 est une vue partielle en plan correspondant à la figure 3.

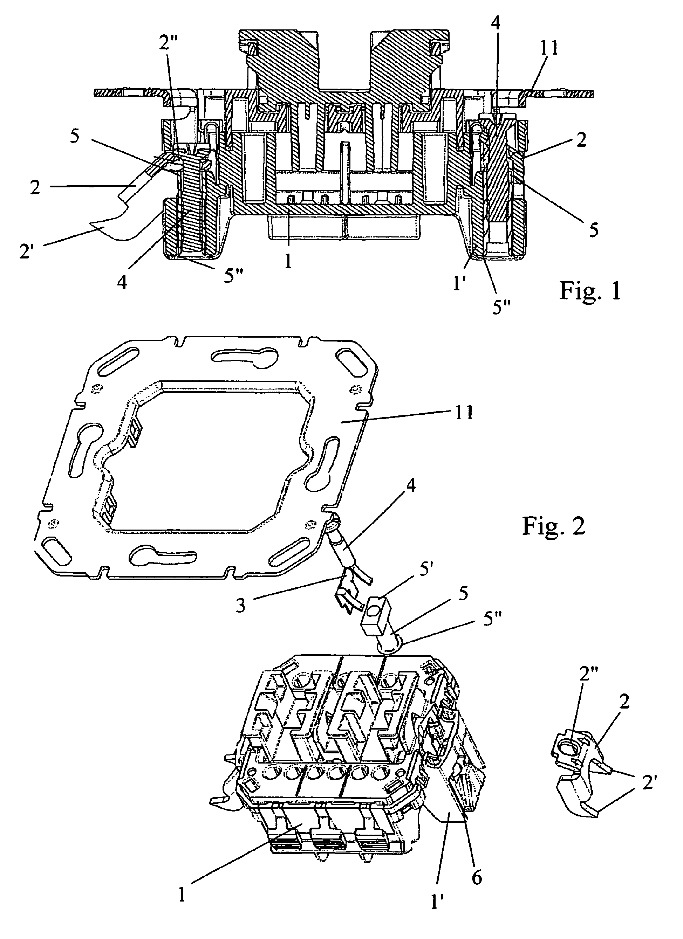

Les figures 1 et 2 des dessins annexés représentent un appareillage semi-encastré 1, électrique, domestique, tel qu'une prise de courant, un interrupteur, un détecteur infrarouge... muni de griffes 2 de fixation dans une boîte d'encastrement, non représentée, chaque griffe étant pourvue de dents 2' destinées à pénétrer dans la paroi de la boîte d'encastrement et d'un dispositif de rappel 3. Chaque griffe 2 est montée sur son support 1' correspondant du corps de l'appareillage par l'intermédiaire d'un bloc de butée taraudé 5. En l'occurrence, l'appareillage électrique 1 représenté aux figures 1 et 2 est un interrupteur et est monté par encliquetage sur un support d'appareillage 11.

Les griffes 2 présentent une forme générale en U ou en étrier, dont les deux ailes verticales parallèles se terminent par des dents 2' et dont l'âme est pourvue d'un perçage 2" de passage d'une vis de serrage 4. Cette vis de serrage 4 est serrée dans le corps de l'appareillage électrique 1 pour réaliser le déplacement de la griffe 2 en direction de son support 1' du corps 1 en vue du déploiement des ailes la constituant et de l'accrochage des dents 2' dans la paroi de la boîte d'encastrement.

Conformément à l'invention, chaque support 1' du corps 1 de l'appareillage est muni, de part et d'autre du bloc de butée 5, de rainures verticales 6 de réception des ailes verticales du U formant la griffe 2, ainsi que des dents 2' prévues aux extrémités desdites ailes, la profondeur de ces rainures 6 étant légèrement supérieure à l'épaisseur desdites ailes avec les dents 2'.

Ainsi, un escamotage total des griffes 2 et en particulier de leurs dents 2' est favorisé et une détérioration de l'isolation de câbles se trouvant dans le boîtier d'encastrement est évitée. Il en résulte qu'en position de repos des griffes 2, leurs ailes et, en particulier, leurs dents 2' sont entièrement escamotées dans les rainures 6, de sorte qu'il n'existe aucune aspérité sur le corps de l'appareillage 1 et qu'ainsi une possibilité de contact électrique entre lesdites griffes 2 et un éventuel conducteur est totalement exclu. Il s'ensuit que la sécurité des opérateurs contre des égratignures est également assurée.

Afin de favoriser le basculement de la griffe 2, l'âme reliant les ailes verticales du U ou étrier la formant s'étend de manière inclinée par rapport à l'axe longitudinal desdites ailes.

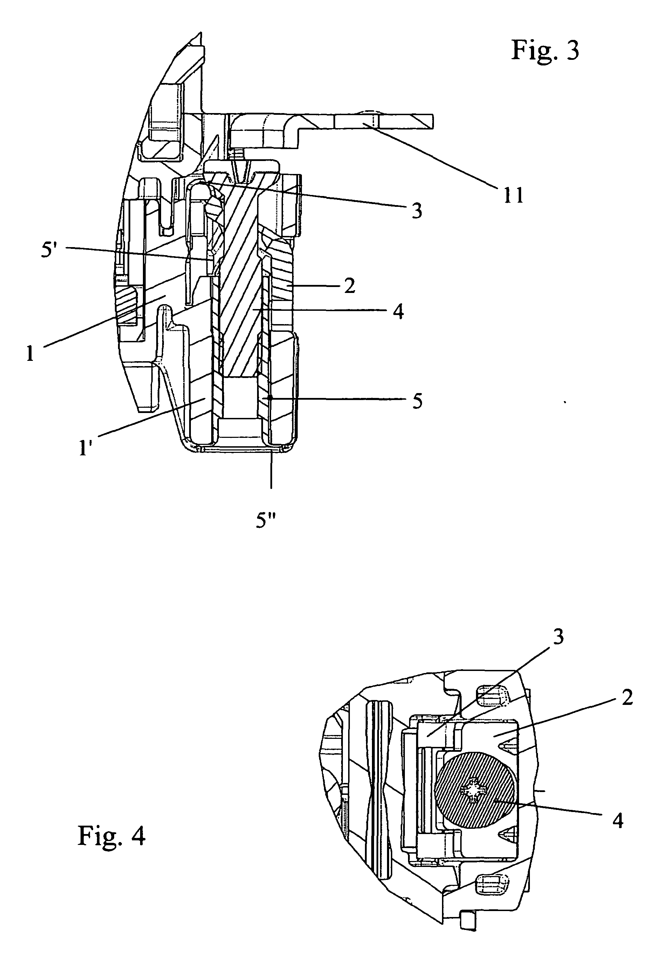

Selon une autre caractéristique de l'invention, le bloc de butée taraudé 5, dans lequel est vissée la vis 4 de serrage de la griffe 2, est sous forme d'un élément inséré dans le support l'et dépasse hors du support l' pour former un palier métallique rigide d'appui et de basculement pour la griffe 2, qui est isolée électriquement par rapport au support d'appareillage 11. En effet, comme il ressort plus particulièrement des figures 1 et 3, le support d'appareillage 11 est solidarisé avec le corps 1 de l'appareillage, sans être en contact ni avec les vis 4 de serrage des griffes 2, ni avec lesdites griffes 2. En outre, chaque bloc de butée 5 est majoritairement noyé dans le support l' correspondant du corps de l'appareillage 1, de sorte qu'il ne peut pas non plus être en contact avec le support d'appareillage 11 et que ce dernier est donc parfaitement isolé par rapport aux griffes 2.

Le bloc de butée 5, plus particulièrement visible sur la figure 2 des dessins annexés, est constitué par un fût central creux taraudé, pourvu à sa partie supérieure d'un élément 5', s'étendant transversalement au fût 5 et présentant avantageusement une section quadrangulaire, et fixé dans le support 1' du corps de l'appareillage 1 par l'intermédiaire d'un sertissage 5", l'élément 5' de la partie supérieure étant inséré dans un logement correspondant de la partie supérieure du support l' du corps de l'appareillage 1 et dépassant hors de ce logement par au moins une arête tournée vers l'extérieur du corps de l'appareillage 1 et formant un palier d'appui et de basculement pour la griffe 2. Le sertissage du bloc de butée 5 sur le support l' du corps de l'appareillage 1 s'effectue après insertion du fût 5 dans un perçage correspondant 1" du support l' du corps de l'appareillage 1 et l'élément 5' fait office de contre-butée pendant l'opération de sertissage.

Chaque griffe 2 s'appuie contre un dispositif de rappel 3, inséré dans le support 1' en arrière de l'axe du bloc de butée 5 et de la vis de serrage 4 et formé par une lame de ressort estampée et pliée présentant une extrémité d'appui constituée par deux ailes parallèles s'étendant de part et d'autre de cet axe et s'appuyant contre l'âme du U formant la griffe 2, dans le prolongement des ailes verticales de ce U. Ainsi, du fait du montage de la griffe 2 sur la vis 4, l'appui des extrémités de l'âme du U formant la griffe 2 contre les ailes de la lame de ressort formant le dispositif de rappel 3, ledit dispositif de rappel 3 a tendance à appliquer l'âme du U formant la griffe 2 contre la tige filetée de la vis 4 et ainsi à faire basculer ladite griffe 2 dans une direction selon laquelle les ailes verticales du U la formant, et donc les dents 2', sont pivotées en direction du corps de l'appareillage 1, en position escamotée des griffes 2.

Le montage des griffes 2 conforme à l'invention est particulièrement simple à effectuer et rapide, chaque griffe 2 pouvant être insérée latéralement sur le support l' de manière à amener leur âme au-dessus du bloc de butée 5, le perçage 2" de ladite âme étant amené au-dessus du taraudage de ce dernier, puis la vis de serrage 4 étant mise en place. Par serrage de la vis 4, la griffe 2 est poussée en direction du bloc de butée 5 jusqu'à venir en appui par son âme inclinée contre l'arête extérieure dudit bloc de butée 5.

Pendant la poursuite du serrage de la vis 4, l'âme effectue alors un pivotement autour de l'arête extérieure du bloc de butée 5 et ses ailes munies des dents 2' sortent des rainures verticales 6 des supports l' jusqu'à entrer en contact avec la paroi intérieure d'un boîtier d'encastrement ou analogue, un serrage complémentaire de la vis 5 assurant un accrochage des dents 2' dans ladite paroi.

Le logement des ailes de la griffe 2 munies des dents 2' dans les rainures verticales 6 des supports l', de part et d'autre du bloc de butée 5 permet d'assurer une isolation électrique supplémentaire desdites griffes 2, lors de la fixation de l'appareillage 1 et de la mise sous pression de ces griffes par les vis 4.

Du fait d'un contact métal-métal entre chaque griffe 2 et le bloc de butée 5 correspondant et du serrage de la vis 4 dans ledit bloc de butée 5, il est possible d'exercer une force de serrage des griffes 2 plus importantes que celles qui pouvaient être exercées jusqu'à ce jour avec le montage des griffes existant. En effet, le bloc de butée 5 étant métallique, l'appui de la griffe 2 sur l'arête de ce bloc 5 s'effectue sans déformation possible dudit bloc, de sorte que la force exercée par la vis de serrage 4 est entièrement transmise à la griffe 2 et transformée en un mouvement de pivotement.

En outre, la constitution même du bloc de butée 5 qui est inséré dans le support 1' du corps de l'appareillage 1, permet l'obtention d'un support 1' particulièrement rigide et ne risquant pas de se déformer en cas d'exercice d'une forte pression sur la vis de serrage 4, par exemple lors de la mise en place de l'appareillage, de sorte qu'une destruction dudit appareillage est évitée.

Enfin, le dispositif de rappel sous forme d'un ressort à lame pliée inséré dans le support 1' derrière l'axe du bloc de butée 5 et de la vis de serrage 4 permet d'assurer une force de rappel constante de la griffe 2 en position de repos, tout en permettant un montage aisé de ladite griffe 2. Il est rappelé à cet effet que dans les modes de réalisation des griffes connues à ce jour, les dispositifs de rappel en position de repos présentent généralement d'importantes difficultés de montage.

Selon une forme de réalisation avantageuse de l'invention, il est possible de réaliser des griffes pour appareillages électriques, domestiques encastrés à monter dans des boîtes d'encastrement permettant d'assurer une parfaite isolation électrique de ces dernières par rapport au support d'appareillage.

Par ailleurs, le montage de griffe conforme à invention permet une manoeuvre et un guidage précis des griffes, tout en assurant une excellente tenue mécanique, même pour une utilisation en condition de montage sévère.

## Revendications

1. Appareillage semi-encastré (1), électrique, domestique, tel qu'une prise de courant, un interrupteur, un détecteur infrarouge... muni de griffes (2) de fixation dans une boîte d'encastrement
les griffes (2) étant montées sur des supports (1') correspondants de l'appareillage, qui font partie intégrante du corps de l'appareillage
les griffes (2) présentant une forme générale en U ou en étrier, dont les deux ailes verticales parallèles se terminent par des dents (2') et dont l'âme est pourvue d'un perçage (2") de passage d'une vis de serrage (4)
les vis de serrage (4) étant serrées dans le corps de l'appareillage (1), vissées dans des taraudages prévus dans les supports (1') ou dans des inserts métalliques rapportés dans ces derniers
chaque support (1') du corps (1) de l'appareillage étant muni, de rainures (6) de réception des ailes verticales du U formant la griffe (2), ainsi que des dents (2') prévues aux extrémités desdites ailes, la profondeur de ces rainures (6) étant légèrement supérieure à l'épaisseur desdites ailes avec les dents (2'),
les ailes des griffes (2), et, en particulier, leurs dents (2'), étant, en position de repos des griffes (2), entièrement escamotées dans les rainures (6), de sorte qu'il n'existe aucune aspérité sur le corps de l'appareillage (1),
les ailes munies des dents (2') pivotant suite au serrage de la vis de serrage (4) pour sortir des rainures (6) des supports (1') jusqu'à entrer en contact avec la paroi intérieure d'un boîtier d'encastrement ou analogue.

2. Appareillage selon la revendication 1, **caractérisé en ce que**
l'âme reliant les ailes verticales du U ou étrier formant chaque griffe (2) s'étend de manière inclinée par rapport à l'axe longitudinal desdites ailes, afin de favoriser le basculement de la griffe (2).

3. Appareillage selon la revendication 1, **caractérisé en ce que**
le support (1') comprend un bloc de butée taraudé (5), dans lequel est vissée la vis (4) de serrage de la griffe (2), est sous forme d'un élément inséré dans le support (1') et dépasse hors du support (1') pour former un palier métallique rigide d'appui et de basculement pour la griffe (2), qui est isolée électriquement par rapport au support d'appareillage (11).

4. Appareillage selon la revendication 3, **caractérisé en ce que**
chaque bloc de butée (5) est constitué par un fût central creux taraudé, pourvu à sa partie supérieure d'un élément (5'), s'étendant transversalement au fût (5) et présentant une section quadrangulaire, et fixé dans le support (1') du corps de l'appareillage (1) par l'intermédiaire d'un sertissage (5"), l'élément (5') de la partie supérieure étant inséré dans un logement correspondant de la partie supérieure du support (1') du corps de l'appareillage (1) et dépassant hors de ce logement par au moins une arête tournée vers l'extérieur du corps de l'appareillage (1) et formant un palier d'appui et de basculement pour la griffe (2)

5. Appareillage selon l'une quelconque des revendications 3 ou 4, **caractérisé en ce que**
les griffes (2) s'appuient chacune contre un dispositif de rappel (3), inséré dans le support (1') en arrière de l'axe du bloc de butée (5) et de la vis de serrage (4) et formé par une lame de ressort estampée et pliée présentant une extrémité d'appui constituée par deux ailes parallèles s'étendant de part et d'autre de cet axe et s'appuyant contre l'âme du U formant la griffe (2), dans le prolongement des ailes verticales de ce U.

## Patentansprüche

1. Elektrisches, teilweise eingebautes Haushaltsgerät (1), wie zum Beispiel eine Steckdose, ein Schalter, ein Infrarotdetektor usw., das mit Krallen (2) zur Fixierung in einem Einbaugehäuse versehen ist,
wobei die Krallen (2) auf entsprechenden Geräteträgern (1') montiert sind, die einen integrierten Teil des Gerätekörpers bilden,
wobei die Krallen (2) eine allgemeine Form eines U oder eines Bügels aufweisen, bei dem die beiden parallelen vertikalen Flügel mit Zähnen (2') enden und bei dem der Steg mit einer Durchgangsbohrung (2") für eine Klemmschraube (4) versehen ist,
wobei die Klemmschrauben (4) in dem Gerätekörper (1) festgezogen sind, in in den Trägern (1') vorgesehenen Innengewinden oder in in diesen Letzteren angefügten metallischen Einsätzen eingeschraubt sind,
wobei jeder Träger (1') des Gerätekörpers (1) mit Nuten (6) zur Aufnahme der vertikalen Flügel des die Kralle (2) bildenden U sowie der an den Enden der Flügel vorgesehenen Zähne (2') versehen ist, wobei die Tiefe dieser Nuten (6) etwas größer als die Dicke der Flügel mit den Zähnen (2') ist,
wobei die Flügel der Krallen (2) und insbesondere ihre Zähne (2') in der Ruhestellung der Krallen (2) vollständig in die Nuten (6) geklappt sind, so dass auf dem Gerätekörper (1) keine Unebenheit besteht,
wobei die mit den Zähnen (2') versehenen Flügel infolge des Festziehens der Klemmschraube (4) schwenken, so dass sie so weit aus den Nuten (6) der Träger (1') austreten, bis sie die Innenwand eines Einbaugehäuses oder dergleichen berühren.

2. Gerät nach Anspruch 1, **dadurch gekennzeichnet, dass**
der die vertikalen Flügel des U verbindende Steg oder Bügel, die jede Kralle (2) bilden sich bezüglich der Längsachse der besagten Flügel geneigt erstreckt, um das Schwenken der Kralle (2) zu begünstigen.

3. Gerät nach Anspruch 1, **dadurch gekennzeichnet, dass**
der Träger (1') einen mit einem Gewinde versehenen Stützblock (5) aufweist, in dem die Klemmschraube (4) für die Kralle (2) eingeschraubt ist, der in Form eines in dem Träger (1') eingesetzten Elements vorliegt und über den Träger (1') hinausragt, um ein metallisches, starres Lager zum Abstützen und Schwenken der Kralle (2) zu bilden, die bezüglich des Geräteträgers (11) elektrisch isoliert ist.

4. Gerät nach Anspruch 3, **dadurch gekennzeichnet, dass**
jeder Stützblock (5) von einem zentralen, hohlen, mit einem Gewinde versehenen Schaft gebildet ist, der an seinem oberen Abschnitt mit einem Element (5') versehen ist, das sich quer zum Schaft (5) erstreckt und einen viereckigen Querschnitt aufweist, und an dem Träger (1') des Gerätekörpers (1) mittels einer Bördelung (5") fixiert ist, wobei das Element (5') des oberen Abschnitts in einer entsprechenden Aufnahme des oberen Abschnitts des Trägers (1') des Gerätekörpers (1) eingefügt ist und über diese Aufnahme um mindestens eine nach außen, in Richtung des Äußeren des Gerätekörpers (1) gerichtete Kante hinausragt und ein Lager zum Stützen und Schwenken für die Kralle (2) bildet.

5. Gerät nach Anspruch 3 oder 4, **dadurch gekennzeichnet, dass**
sich die Krallen (2) jeweils auf einer Rückholvorrichtung (3) stützen, die in dem Träger (1') hinter der Achse des Stützblocks (5) und der Klemmschraube (4) eingefügt ist und durch ein gestanztes und gefalztes Federblatt gebildet ist, das ein Stützende aufweist, welches von zwei parallelen Flügeln gebildet wird, welche sich beiderseits dieser Achse erstrecken und sich auf dem Steg des die Kralle (2) bildenden U in der Verlängerung der vertikalen Flügel dieses U abstützen.

## Claims

1. A domestic, electrical, semi-embedded apparatus (1) such as a power outlet, a switch, an infrared detector etc., furnished with claws (2) for fastening in a flush-mounting box
the claws (2) being mounted on corresponding supports (1') of the apparatus which form an integral part of the body of the apparatus
the claws (2) being generally U-shaped or yoke-shaped, the two parallel, vertical flanges of which terminate in teeth (2') and the web of which is provided with a piercing (2') for the passage of a clamping screw (4), the clamping screws (4) being clamped in the body of the apparatus (1), screwed into tappings provided in the supports (1') or in metal inserts fitted into the latter
each support (1') of the body (1) of the apparatus being furnished with grooves (6) for receiving the vertical flanges of the U forming the claw (2), and the teeth (2') provided at the ends of said flanges, the depth of these grooves (6) being slightly greater than the depth of the said flanges with the teeth (2'),
the flanges of the claws (2), and, in particular, their teeth (2'), being, in the rest position of the claws (2), fully recessed into the grooves (6) so that there is no roughness on the body of the apparatus (1), the flanges furnished with the teeth (2') pivoting following the clamping of the clamping screw (4) in order to come out of the grooves (6) of the supports (1') as far as to come into contact with the inner wall of a flush-mounting box or similar element.

2. Apparatus according to Claim 1, **characterized in that** the web connecting the vertical flanges of the U or yoke forming each claw (2) extends in an inclined manner relative to the longitudinal axis of the said flanges, in order to promote the tilting of the claw (2).

3. Apparatus according to Claim 1, **characterized in that** the support (1') comprises a tapped abutment block (5) into which the screw (4) for clamping the claw (2) is screwed, is in the form of an element inserted into the support (1') and protrudes from the support (1') in order to form a rigid metal bearing of support and of tilting for the claw (2), which is electrically insulated relative to the apparatus support (11).

4. Apparatus according to Claim 3, **characterized in that** each abutment block (5) consists of a tapped hollow central barrel provided at its top portion with an element (5') extending transversely to the barrel (5) and having a quadrangular section, and fixed in the support (1') of the body of the apparatus (1) by means of a crimping (5"), the element (5') of the upper portion being inserted into a corresponding housing of the upper portion of the support (1') of the body of the apparatus (1) and protruding from this housing by at least one ridge turned towards the outside of the body of the apparatus (1) and forming a bearing of support and of tilting for the claw (2).

5. Apparatus according to either one of Claims 3 and 4, **characterized in that** the claws (2) each rest against a return device (3), inserted into the support (1') behind the axle of the abutment block (5) and of the clamping screw (4) and formed by a stamped and folded spring blade having a bearing end consisting of two parallel flanges extending on either side of this axle and pressing against the web of the U forming the claw (2), in line with the vertical flanges of this U.
